# EUROPÄISCHE PATENTSCHRIFT

(11) **EP 2 257 726 B1**
(45) Veröffentlichungstag und Bekanntmachung des Hinweises auf die Patenterteilung: **10.04.2013**
(21) Anmeldenummer: 09710453.3
(22) Anmeldetag: 12.02.2009
(51) Int. Cl.: F16L 19/02, F16L 19/06

(54) **Hochdruckverschraubung**
High-pressure screw connection
Assemblage vissé à haute pression

(30) Priorität: 15.02.2008 DE 202008002211 U
(43) Veröffentlichungstag der Anmeldung: 08.12.2010
(73) Patentinhaber: Weh, Erwin, 89257 Illertissen (DE); Weh, Wolfgang, 89257 Illertissen (DE)
(72) Erfinder: Weh, Erwin, 89257 Illertissen (DE); Weh, Wolfgang, 89257 Illertissen (DE)
(74) Vertreter: Sawodny, Michael-Wolfgang
(86) Internationale Anmeldenummer: PCT/EP2009/000957
(87) Internationale Veröffentlichungsnummer: WO 2009/100898

(56) Entgegenhaltungen:
- EP-A- 0 753 698
- WO-A-02/01105
- DE-A1- 3 202 429
- DE-A1- 4 041 679
- DE-U- 1 960 933
- US-A- 3 201 154

## Beschreibung

Die Erfindung betrifft eine Hochdruckverschraubung für die Übertragung von gasförmigen, flüssigen und/oder festen Medien.

Mit derartigen Verschraubungen, die auch für niedrigere Druckbereiche geeignet sind, soll eine sichere Übertragung eines Mediums von einer Druckquelle oder einem Druckspeicher, beispielsweise von einer Hydraulikpumpe oder Betankungsanlage aus, erreicht werden. Wichtig ist hierbei die leckagefreie Ausführung, um einen Medienaustritt in die Umgebung zu vermeiden.

Eine derartige Hochdruckverschraubung ist beispielsweise in der EP-0 753 698 A für Druckmittelleitungen oder in der WO 02/01105 A für Rohrverschraubungen beschrieben. Derartige Hochdruckverschraubungen mit Klemmringen sind auch Gegenstand der US-Patente 3,584,900 oder 3,103,373, wobei insbesondere die Ausführung der Klemmringe (Schneidringe) betont wird, um eine sichere Fixierung der angeschlossenen Rohre und deren leckagefreie Abdichtung zu gewährleisten. Bei steigenden Druckwerten von mehr als 700 bar werden diese Rohranschlüsse jedoch zunehmend empfindlicher gegen Leckagen, so dass im allgemeinen ein Austritt von Medium, z. B. Hydrauliköl oder vorgekühltem Wasserstoffgas, zu erwarten ist. Hierbei könnte es zu Unfällen kommen, insbesondere könnte durch Lecks bei unter Druck stehenden Leitungen erheblicher Schaden entstehen. Zudem beanspruchen die in die Außenhaut der Rohre eindringenden Schneidringe das Rohr erheblich, so dass es bei Wechselbeanspruchungen (z. B. schon bei leichten Rohrschwingungen) zu einem Riss oder gar Bruch kommen kann.

Aus der DE 1 960 933 U ist eine gattungsbildende Hochdruckverschraubung für die Übertragung von gasförmigen, flüssigen oder festen Medien mit einem rohrförmigen Körper, der zumindest teilweise von einer Dichthülse umgeben ist, bekannt geworden.

Die WO 02/01105 A und die EP 0 753 698 A beschreiben Rohrverschraubungen mit Entlüftungsbohrungen.

Der Erfindung liegt die Aufgabe zugrunde, eine Hochdruckverschraubung zur Verfügung zu stellen, die die Nachteile des Standes der Technik vermeidet. Insbesondere soll eine Hochdruckverschraubung zur Verfügung gestellt werden, die bei einfacher Bauweise sicherheitstechnisch verbessert ist, so dass Gefahren bzw. Schäden vermieden werden.

Diese Aufgabe wird gelöst durch eine Hochdruckverschraubung gemäß Anspruch 1. Die Hochdruckverschraubung weist wenigstens einen Hohlkörper, insbesondere einen rohrförmigen Körper auf der zumindest teilweise von einer Dichthülse umgeben und dadurch gekennzeichnet ist, dass die Dichthülse stoffschlüssig mit dem rohrförmigen Körper verbunden ist. Die Hochdruckverschraubung umfasst ein Gehäuse mit einer Fluidpassage und einem Dichtkonus Erfindungsgemäß ist die Dichthülse von einer Ringkammer umgeben, die in eine Entlüftungsbohrung mündet.

Gemäß der Erfindung wird eine Hochdruckverschraubung für die Übertragung von gasförmigen und/oder flüssigen Fluiden, insbesondere zum Betanken von Fahrzeugen, umfassend ein Gehäuse mit einer Fluidpassage und einem Dichtkonus sowie einem darin eingesteckten Rohr, dessen Ende von einer zumindest teilweisen konischen Dichthülse umgeben ist, die von einer Schraubmutter axial beaufschlagt ist, zur Verfügung gestellt, wobei eine Dichthülse vollständig auf das Rohr aufgeschoben und am Rohrende fixiert, insbesondere mit einer umlaufenden Schweißnaht benachbart zum Rohrende verschweißt ist.

Bevorzugte Weiterbildungen der Erfindung sind Gegenstand der Unteransprüche.

Bevorzugt weist die Dichthülse einen ringförmigen Absatz auf, in den ein Dichtring korrespondierend zum Dichtkonus des Gehäuses eingesetzt ist.

Bevorzugt ist zwischen Dichthülse und Schraubmutter eine ringförmige Schraubensicherung vorgesehen, die insbesondere aus zwei Scheiben besteht. In einer weitergebildeten Ausführungsform umgreift das gehäuseseitige Ende der Schraubmutter die Dichthülse und/oder Schraubensicherung in Axialrichtung.

Bevorzugt kann das Gehäuse geradlinig, abgewinkelt, als T-Stück oder als Kreuzstück ausgebildet sein.

In einer bevorzugten Ausführungsform besteht der Dichtring mit konischer Außenform aus einem druckfesten Kunststoff, insbesondere aus PEEK, kann aber auch aus NE(Nicht Eisen)-Metallen wie z. B. AI-Legierungen, Monell, KupferLegierungen oder Buntmetall sein.

Ganz besonders bevorzugt ist es, wenn die Dichthülse, mit enger Passung auf das Rohr aufgeschoben ist, insbesondere mit einer Durchmessertoleranz von weniger als 1 mm, vorzugsweise < 0,1 mm.

Sämtliche zuvor beschriebenen Maßnahmen können beliebig kombiniert werden, ohne dass es für den Fachmann einer erfinderischen Tätigkeit bedarf.

Durch die stoffschlüssige Verbindung der Dichthülse mit dem Rohr wird im Gegensatz zu den Verbindungen im Stand der Technik mit Schneidringen eine leckagefreie Verbindung auch bei hohen Drücken von mehr als 700 bar, insbesondere mehr als 1000 bar und sogar mehr als 4000 bar erreicht. Des Weiteren wird durch die stoffschlüssige Verbindung der rohrförmige Körper entlastet, insbesondere treten keine Axialbelastungen auf. Des Weiteren wird eine Verformung des rohrförmigen Körpers, insbesondere des Rohres vermieden und ein Lösen aus der Verbindung verhindert. Bei der stoffschlüssigen Verbindung wird die Permeationsrate, d. h. die Leckagerate im Wesentlichen durch die eingesetzten Grundmaterialien des rohrförmigen Körpers und der Dichthülse bestimmt.

Mögliche stoffschlüssige Verbindung zwischen der Druckhülse und dem rohrförmigen Körper sind alle möglichen stoffschlüssigen Verbindungen, wie beispielsweise eine Lötverbindung, eine Schweißverbindung, eine Klebeverbindung. Andere mögliche Verbindungen sind eine Pressverrbindung, eine Vulkanisierungsverbindung oder eine Schrumpfverbindung. Stoffschlüssige Verbindungen zeichnen sich dadurch aus, dass die beiden Verbindungspartner durch atomare oder molekulare Kräfte zusammengehalten werden, und sich voneinander nur durch Zerstörung des Verbindungsmittels trennen lassen.

Ganz besonders bevorzugt ist es, wenn die stoffschlüssige Verbindung zwischen der Dichthülse und dem rohrförmigen Körper durch ein Schweißverfahren hergestellt wird, insbesondere durch Laserschweißen.

An der Außenseite der Dichthülse, die vom rohrförmigen Körper weggerichtet ist, weißt die Dichthülse eine Riffelung, insbesondere Rillen auf. Diese Rillen dienen dazu, eine auf die Dichthülse aufgebrachte Dichtung, beispielsweise einen Dichtring zu halten. Der Dichtring greift bevorzugt in einen Dichtkonus eines die Dichthülse teilweise umschließenden Gehäuse ein und dichtet so die Dichthülse gegenüber dem Gehäuse ab.

Durch die auf der Außenseite der Dichthülse angebrachten Rillen wird eine derartige Dichtung fixiert und ein sicherer Sitz der Dichtung auf der Dichthülse gewährleistet. Des Weiteren wird sichergestellt, dass die Dichtung auch bei einem Lösen der Verschraubung sicher gehalten wird. Das Einbringen der Rillen in der Außenseite der Dichthülse kann entweder mit spanabhebenden Verfahren oder spanloser Verformung erfolgen. Selbstverständlich sind auch andere Verankerungen der Dichtung an der Außenseite der Dichthülse möglich.

Der rohrförmige Körper, der das gasförmige, flüssige und/oder feste Medium überträgt kann auf der Dichthülse abgewandten Seite eine Fittingkontur aufweisen. Auf die Fittingkontur kann beispielsweise ein flexibler Schlauch, beispielsweise ein Hydraulikschlauch aufgezogen werden.

In einer weitergebildeten Ausführungsform umfasst die Verschraubung ein Gehäuse, dass eine Fluidpassage aufweist, sowie einen Dichtkonus. In dieses Gehäuse wird die Dichthülse mit dem rohrförmigen Körper, mit dem sie stoffschlüssig verbunden ist eingeführt und von dem Gehäuse wenigstens teilweise umschlossen. Bevorzugt weist das Gehäuse einen Dichtkonus auf. Dichtkonus und Dichthülse mit eingeführtem Rohr werden dicht miteinander verbunden. Bevorzugt geschiet dies mit einem Dichtring, der auf die Dichthülse aufgebracht ist und in den Dichtkonus eingreift.Alternativ oder zusätzlich kann die Dichthülse einen schmalen konischen Bereich aufweisen, der mit dem Dichtkonus des Gehäuses eine metallische Dichtfläche bildet. Durch eine derartige Ausgestaltung wird eine metallische Dichtung auch dann erreicht, wenn zwischen Dichthülse und Gehäuse kein Dichtring vorhanden ist. Das Einbringen des konischen Bereiches in die Dichthülse kann entweder spannend oder spanlos erfolgen.

Die zuvor beschriebene Dichtung, die auf die Dichthülse aufgebracht und in den Dichtkonus des Gehäuses eingesetzt werden kann, weist bevorzugt ein Dichtmaterial auf, das weicher ist als das Grundmaterial, das heißt, das Material des rohrförmigen Körpers, bzw. des Gehäuses. Besonders bevorzugt kann hier ein Dichtring aus PEEK (Polyetheretherketon) eingesetzt werden, der auch bei extremen Minustemperaturen von beispielsweise - 75°C eine hohe Mediumbeständigkeit und Dichtheit aufweist. Die Geometrie des Dichtringes ist in der Regel der des Gehäuses angepasst. Mit Hilfe des Dichtringes und/oder der metallischen Dichtung wird eine Abdichtung der Dichthülse gegenüber dem Gehäuse erreicht.

Das Aufbringen des Dichtringes auf der Dichthülse kann durch Verpressen, durch eine formschlüssige oder stoffschlüssige Verbindung, durch Aufspritzen, Vulkanisieren, Bonden oder Kleben erfolgen.

Bevorzugt umfasst die Verschraubung eine Spannschraube, mit dem das Gehäuse mit der Dichthülse verschraubt wird. Die Spannschraube stellt eine kraftschlüssige Verbindung zwischen Spannungsschraube, dem zwischen Spannschraube und Dichthülse eingebrachten Sicherungselement und der Dichthülse zur Verfügung. Als Materialien für die Spannschraube kommt insbesondere Edelstahl, als auch Leicht-, Buntmetalle und Kunststoffe wie z. B. Aluminium-Legierungen, Messing-Legierungen, POM oder PVDF in Betracht. Die Bearbeitung der Spannschraube erfolgt entweder spanabhebend oder durch spanlose Verformung.

Um bei ungünstigen mechanischen Belastungen, insbesondere bei Vibrationen das Lösen des Einschraubers, umfassend vorliegend Rohr, Dichtung, Dichthülse, Spannschraube und Sicherungsscheibe, zu verhindern, kann eine Schraubensicherung vorgesehen sein, die bevorzugt aus zwei zueinander beweglich ausgebildeten Scheiben besteht.

Durch ein derartiges Sicherungssystem wird auch das Losdrehmoment erhöht.

Um einen unerwünschten Druckaufbau im Gehäuse zu vermeiden, kann vorgesehen sein, dass das Gehäuse eine Entlüftungsbohrung oder eine Kerbe, die in das Gewinde des Gehäuseteils eingebracht ist, aufweist. Durch die Entlüftungsbohrung wird es des Weiteren auch ermöglicht Leckagemessungen vorzunehmen.

Bevorzugtes Material für das Gehäuse sind Leichtmetallegerieungen und alle metallisch und nichtmetallischen Werkstoffe. Ansonsten sind alle denkbaren Materialkombinationen möglich. Damit der rohrförmige Körper in der Dichthülse, wie auch in der Schraubenmutter keinen Biegebelastungen ausgesetzt ist, ist es von Vorteil, wenn eine sehr genaue Passung, das heisst eine enge Toleranz im Bereich der Dichthülse und der Schraubmutter, bzw. der Spannungsschraube vorliegt. Besonders bevorzugt sind hierbei Durchmessertoleranzen von weniger 1 mm, vorzugsweise weniger als 0,1 mm.

Die erfindungsgemäße Verschraubung, insbesondere Hochdruckverschraubung zeichnet sich durch eine besonders hohe Sicherheit und einfache Bauweise aus, da durch die vorgeschlagene Fixierung der Dichthülse am Rohrende ein einfacher Anschluss erreicht wird, so dass Gefährdungen bzw. Beschädigungen ausgeschlossen werden können. Insbesondere wird das Rohr ohne Verspannungen in der Dichthülse geführt, so dass Spannungsspitzen vorgebeugt wird und mit der vorgeschlagenen Hochdruckverschraubung sicher und langfristig vermieden werden kann, dass Gas, Flüssigkeit oder Feststoff austreten kann. Dies ist insbesondere aus Unfallschutzgründen wichtig, aber auch zum Umweltschutz, so dass kein erhebliches Mediumvolumen verloren gehen kann.

Es sei darauf hingewiesen, dass sich die vorgeschlagene Verschraubung für verschiedene Anschlüsse eignet, insbesondere für Hochdrucksysteme/ - anschlüsse im Fahrzeugbau, aber auch bei Industrieanlagen oder zur Kfz-Betankung. Die Verschraubung, insbesondere Hochdruckverschraubung kann dabei an beliebiger Stelle der Verrohrung in kompakter Weise eingebaut sein und auch Ventile oder Filter benachbart zu der Verschraubung aufweisen.

Nachfolgend wird ein Ausführungsbeispiel anhand der beiliegenden Zeichnung näher erläutert und beschrieben. Hierin zeigt:
Fig. 1 eine erste Ausführungsform einer Hochdruckverschraubung im Längsschnitt.
Fig.2a - c eine zweite Ausführungsform einer Hochdruckverschraubung mit einem Fitting

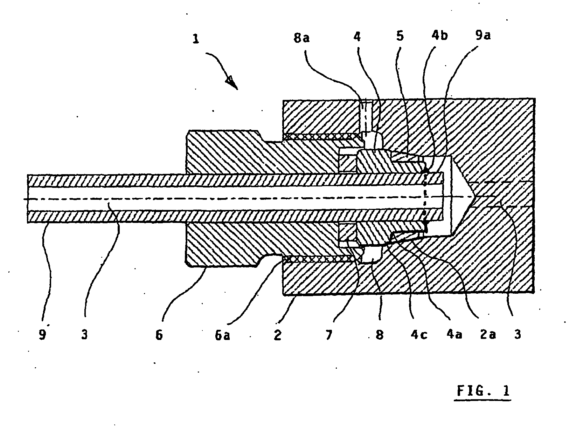

In Fig. 1 ist ein erstes Ausführungsbeispiel einer Verschraubung, insbesondere einer Hochdruckverschraubung 1 mit einem Gehäuse 2 gezeigt, wobei die hier rechte Stirnseite mit einer strichliert dargestellten Mediumpassage 3 z. B. als Einlass dient und die linke Stirnseite für die Weiterleitung des zu übertragenden Mediums über ein darin eingestecktes Rohr 9, beispielsweise an einen nicht dargestellten Arbeitszylinder oder Drucktank. An der linken Stirnseite des Gehäuses 2 ist eine Schraubmutter 6 vorgesehen, die über ein Gewinde 6a und eine Schraubensicherung 7 gegen das Gehäuse 2 verschraubt ist. Die Schraubensicherung 7 besteht dabei bevorzugt aus zwei gegeneinander relativ beweglichen Scheiben, so dass bei Vibrationen (beispielsweise in einem Fahrzeug) ein Lösen sicher verhindert werden kann.

Im Inneren des Gehäuses 2 ist eine Dichthülse 4 vorgesehen, in die das Rohr 9 zur Fortführung der Mediumpassage 3 eingesteckt wird, die als Leitung zur Zu- bzw. Abführung des zu übertragenden Mediums dient. Das Gehäuse 2 kann hierbei in Anpassung an das zu übertragende Medium, insbesondere an die jeweils gewünschten Zuführwinkel, Durchlassquerschnitte usw., beispielsweise auch gekröpft oder abgewinkelt oder als Kreuzstück gestaltet sein.

Die erfindungsgemäße Verschraubung, insbesondere Hochdruckverschraubung 1 für die Übertragung von gasförmigen, flüssigen und/oder festen Medien ist dadurch gekennzeichnet, dass die Dichthülse 4 am Rohrende 9a , insbesondere durch eine stoffschlüssige Verbindung fixiert ist. Insbesondere ist die Dichthülse mit einer umlaufenden Schweißnaht 4b am Rohrende 9a, also nahe am stirnseitigen Eintritt zur Mediumpassage 3 verschweißt. Bei der dargestellten Ausführungsform ist die Dichthülse nicht nur teilweise, sondern ganz auf das Rohr 9 aufgeschoben. Des Weiteren weist die Dichthülse 4 in der dargestellten Ausführungsform einen schmalen konischen Bereich 4c auf, der mit dem Dichtkonus 2a eine metallische Dichtfläche bildet. Bevorzugt ist die Dichthülse 4 von einer Ringkammer 8 umgeben, die in eine Entlüftungsbohrung 8a mündet. Hierdurch kann ein unerwünschter Druckaufbau vermieden werden.

Insbesondere weist die Dichthülse 4 einen ringförmigen Absatz 4a auf, in den ein Dichtring 5 korrespondierend zum Dichtkonus 2a des Gehäuses 2 eingesetzt ist. Vorzugsweise besteht der Dichtring 5 mit seiner konischen Außenform aus PEEK (Polyetheretherketon), da dieser widerstandsfähige Werkstoff auch bei extremen Minustemperaturen eine hohe Medienbeständigkeit und Dichtheit bietet.

Zudem ist von Vorteil, dass bei der dargestellten Ausführungsform das gehäuseseitige Ende der Schraubmutter 6 die Dichthülse 4 und/oder Schraubensicherung 7 in Axialrichtung umgreift. Hierdurch wird das durchmessergrößere Ende der Dichthülse 4 umgriffen und stabilisiert. Selbst wenn das hier nach links weisende Rohr 9 Biegebelastungen ausgesetzt ist, wird die Schweißnaht 4b am Rohrende 9a aufgrund der exakten Führung in der Schraubmutter 6 und insbesondere wegen der genauen Passung (enge Toleranz) in der Dichthülse 4 keinen Biegespannungen ausgesetzt. Daher genügt bereits eine relativ "feine" Schweißnaht 4b zur sicheren Fixierung.

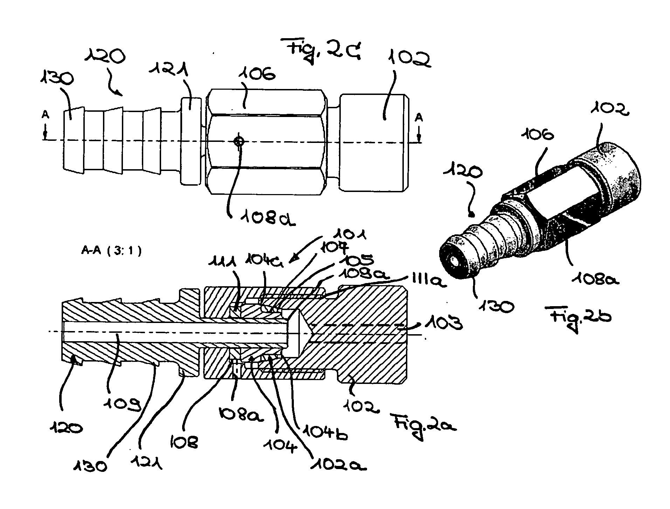

In den Figuren 2a bis 2c ist eine alternative Ausgestaltung der Erfindung dargestellt. Gleiche Bauteile wie in Figur 1 sind mit um 100 erhöhten Bezugsziffern belegt.

Im Längsschnitt A-A gemäß Figur 2a ist eine weitere Ausführungsform einer Verschraubung 101, insbesondere einer Hochdruckverschraubung mit einem Gehäuse 102 gezeigt, wobei das Gehäuse Fluidpassage 103 aufweist. Die in das Gehäuse 102 eingelassene Fluidpassage 103 dient z. B. als Einlass für ein Fluid, dass in das Rohr 109 weitergeleitet wird. Wie schon bei der Ausführungsform gemäß Figur 1 ist auf das Rohr 109 eine Dichthülse 104 aufgeschoben, die erfindungsgemäß stoffschlüssig, beispielsweise mit einer Schweißnaht 104b am Rohrende 109a verbunden ist. Die Dichthülse weist des Weiteren einen konischen Bereich 104c auf, der mit dem in das Gehäuse eingelassenen Dichtkonus 102a eine metallische Dichtfläche im Bereich 103 bildet. Zusätzlich zur metallischen Dichtung im Bereich 103 zwischen dem in das Gehäuse eingelassenen Dichtkonus 102a und dem konischen Bereich 104c der Dichthülse, besitzt die Dichthülse einen Bereich 107, der beispielsweise eine Riffelung (nicht gezeigt) aufweisen kann. In diesem Bereich 107 wird auf den Dichtkonus ein Dichtmaterial aufgebracht, beispielsweise durch Verpressen oder Aufschrumpfen. Das Dichtmaterial ist bevorzugt ein Dichtring 105, der aus einem PEEK (Polyetheretherketon) bestehen kann. Der Dichtring 105 dichtet die Dichthülse zusätzlich gegenüber dem Gehäuse ab.

Wie schon bei der Ausführungsform gemäß Figur 1, ist bei der Ausführungsform Figur 2a - c eine Schraubmutter 106 vorgesehen, die bevorzugt als Spannschraube ausgelegt ist. Die Spannschraube ist über ein Gewinde 111a, das vorliegend in ein Außengewinde des Gehäuses 102 im Gegensatz zur Ausführungsform gemäß Figur 1 eingreift und eine Schraubsicherung 111 gegen das Gehäuse 102 verschraubt. Die Schraubsicherung 107 besteht bevorzugt aus zwei gegeneinander relativ bewegliche Scheiben, so dass bei Vibrationen ein Lösen sicher verhindert werden kann. Die Verwendung eines Außengewindes mit dem die Schraubmutter 106 mit dem Gehäuse verschraubt wird, hat den Vorteil, dass die Verbindung mit bestehenden Medientransfersystemen verwendet werden kann wie z. B. Rohre, Schläuche.

Des Weiteren zu erkennen ist, die in die Schraubmutter 106 eingebrachte Entlüftungsbohrung 108a, die in eine Ringkammer 108 mündet, die die Dichthülse 104 umgibt. Mit Hilfe der Entlüftungsbohrung 108a kann ein unerwünschter Druckaufbau bei eventuell auftretender Undichtigkeit in der Ringkammer vermieden werden. Als weiterer Unterschied weist die Ausführungsform gemäß Figur 2a -c gegenüber der in Figur 1 dargestellten Ausführungsform an der dem Gehäuse abgewandten Seite des Rohres 109, eine Fittingkontur 120 auf. Die Fittingkontur umfasst einen Anschlag 121 sowie eine Profilierung 130. Auf die Profilierung kann eine Leitung, beispielsweise eine Kunststoffleitung aufgeschoben und mit dem Fitting verpresst werden. Dadurch ist es möglich, an die erfindungsgemäße Verschraubung eine flexible Leitung anzuschließen, z. B. wie oben beschrieben durch Verpressung.

In Figur 2b ist eine dreidimensionale Ansicht einer Verbindung gemäß Figur 2a gezeigt und in Figur 2c eine Draufsicht. Gleiche Bauteile, wie im Längsschnitt entlang der Linie A - A wie in Figur 2a sind mit denselben Bezugsziffern belegt.

Deutlich zu erkennen ist in Figur 2b -c die Außenkontur der Schraubmutter 6, die als eine Mehrkantschraube ausgelegt ist. Deutlich zu erkennen ist auch, die in die Außenwand der Schraubmutter eingelassene Entlüftungsbohrung 108a.

Diese Gestaltung erlaubt somit eine einfache Montage der Verschraubung 1, insbesondere der Hochdruckverschraubung, wobei eine sichere Verbindung und Abdichtung auch bei sehr hohen Drücken von bis zu 4000 bar und extremen Temperaturbereichen im Plus- und Minusbereich von -100°C - +150°C insbesondere von 80°C - +120°C sichergestellt wird.

## Patentansprüche

1. Hochdruckverschraubung (1) für die Übertragung von gasförmigen, flüssigen und/oder
festen Medien, insbesondere zum Betanken von Fahrzeugen, umfassend
- einen rohrförmigen Hohlkörper (9), der
zumindest teilweise von einer Dichthülse (4) umgeben ist , wobei die Hochdruckverschraubung (1) ein Gehäuse (2) mit einer Fluidpassage (3) einem Dichtkonus (2a) umfasst **dadurch gekennzeichnet, dass**
- die Dichthülse (4) mit dem rohrförmigen Körper (9) derart stoffschlüssig verbunden ist, dass eine leckagefreie Verbindung für Drücke von mehr als 700 bar, insbesondere mehr als 1000 bar, ganz bevorzugt mehr als 4000 bar zur Verfügung gesteilt wird und durch die stoffschlüssige Verbindung der rohrförmigen Körper (9) entlastet wird, so dass keine Axialbelastungen auftreten;
und
die Dichthülse (4) von einer Ringkammer (8) umgeben ist, die in eine Entlüftungsbohrung (8a) mündet.

2. Hochdruckverschraubung nach Anspruch 1,
**dadurch gekennzeichnet, dass** die stoffschlüssige Verbindung eine der nachfolgenden Verbindungen ist:
- eine Lötverbindung
- eine Schweißverbindung
- eine Klebeverbindung
- eine Vulkanisierungsverbindung.

3. Hochdruckverschraubung nach einem der Ansprüche 1 bis 2,
**dadurch gekennzeichnet, dass**
die stoffschlüssige Verbindung eine Schweißnaht (4b, 104b) umfasst.

4. Hochdruckverschraubung gemäß einem der Ansprüche 1 bis 3,
**dadurch gekennzeichnet, dass**
die Dichthülse (4) an einer vom rohrförmigen Körper (9) weggerichteten Seite Rillen aufweist.

5. Hochdruckverschraubung gemäß einem der Ansprüche 1 bis 4,
**dadurch gekennzeichnet, dass**
der rohrförmlge Köper (9) an der der Dichthülse (4) abgewandten Seite eine Fittingkontur (120) aufweist.

6. Hochdruckverschraubung gemäß einem der Ansprüche 1 bis 5,
**dadurch gekennzeichnet, dass** die Dichthülse (4) vollständig auf den rohrförmigen Körper, insbesondere das Rohr (9) aufgeschoben ist.

7. Hochdruckverschraubung gemäß einem der Ansprüche 1 bis 6,
**dadurch gekennzeichnet, dass**
der rohrförmige Körper (9) mit Dichthülse (4) in das Gehäuse (2) eingesteckt ist

8. Hochdruckverschraubung nach einem der Ansprüche 1 bis 7, **dadurch gekennzeichnet, dass**
die Dichthülse (4) einen ringförmigen Absatz (4a) aufweist, In den ein Dichtring (5) korrespondierend zu einem Dichtkonus (2a) eines Gehäuses (2) eingesetzt ist.

9. Hochdruckverschraubung nach einem der Ansprüche 1 bis 8, **dadurch gekennzeichnet, dass** zwischen Dichthülse (4) und einer Schraube, insbesondere einer Schraubmutter (6) eine Schraubensicherung (7) vorgesehen ist, die insbesondere aus zwei Scheiben besteht.

10. Hochdruckverschraubung nach einem der Ansprüche 1 bis 9, **dadurch gekennzeichnet, dass** ein gehäuseseitige Ende einer Schraube, insbesondere einer Schraubmutter (6) die Dichthülse (4) und/oder Schraubensicherung (7) in Axialrichtung umgreift.

11. Hochdruckverschraubung nach Anspruch 10, **dadurch gekennzeichnet, dass** eine Schraube, insbesondere eine Schraubmutter (6) das Gehäuse zumindest teilweise in Axialrichtung umgreift.

12. Hochdruckverschraubung nach einem der Ansprüche 1 bis 11, **dadurch gekennzeichnet, dass** ein Gehäuse (2) geradlinig, abgewinkelt, als T-Stück oder als Kreuzstück ausgebildet ist.

13. Hochdruckverschraubung nach einem der Ansprüche 8 bis 12, **dadurch gekennzeichnet, dass** der Dichtring (5) mit konischer Außenform aus einem druckfesten Kunststoff, insbesondere aus PEEK besteht.

14. Hochdruckverschraubung nach einem der Ansprüche 1 bis 13, **dadurch gekennzeichnet, dass** die Dichthülse (4) mit enger Passung auf das Rohr (9) aufgeschoben ist, Insbesondere mit einer Durchmessertoleranz von weniger als 1 mm, vorzugsweise < 0,1 mm.

## Claims

1. A high-pressure screw connection (1) for transferring gaseous, fluid and/or solid media, especially for refuelling a car, comprising:
- a tubular hollow body (9) which is surrounded at least in part by a sealing sleeve (4), with the high-pressure screw connection (1) comprising a housing (2) with a fluid passage (3) and a sealing cone (2a),
**characterized in that**
- the sealing sleeve (4) is materially connected to the tubular body (9) in such a way that a leakage-free connection is provided for pressures of more than 700 bar, especially more than 1000 bar, more preferably more than 4000 bar, and the tubular body (9) is relieved by the material connection, so that no axial loads occur, and sealing sleeve (4) is surrounded by an annular chamber (8) which opens into a ventilation bore (8a).

2. A high-pressure screw connection according to claim 1, **characterized in that** the material connection is one of the following connections:
- a soldered connection;
- a welded connection;
- a glued connection;
- a vulcanizing connection.

3. A high-pressure screw connection according to one of the claims 1 to 2, **characterized in that** the material connection is a welded seam (4b, 104b).

4. A high-pressure screw connection according to one of the claims 1 to 3, **characterized in that** the sealing sleeve (4) comprises grooves on a side facing away from the tubular body (9).

5. A high-pressure screw connection according to one of the claims 1 to 4, **characterized in that** the tubular body (9) comprises a fitting contour (120) on the side facing away from the sealing sleeve (4).

6. A high-pressure screw connection according to one of the claims 1 to 5, **characterized in that** the sealing sleeve (4) is completely slid onto the tubular body, especially the tube (9).

7. A high-pressure screw connection according to one of the claims 1 to 6, **characterized in that** the tubular body (9) is inserted with the sealing sleeve (4) into the housing (2).

8. A high-pressure screw connection according to one of the claims 1 to 7, **characterized in that** the sealing sleeve (4) comprises an annular shoulder (4a), into which a sealing ring (5) corresponding to a sealing cone (2a) of a housing (2) is inserted.

9. A high-pressure screw connection according to one of the claims 1 to 8, **characterized in that** a screw retainer (7) is provided between the sealing sleeve (4) and a screw, especially a screw nut (6), said screw retainer especially consisting of two disks.

10. A high-pressure screw connection according to one of the claims 1 to 9, **characterized in that** an end of a screw on the housing side, especially a screw nut (6), encompasses the sealing sleeve (4) and/or the screw retainer (7) in the axial direction.

11. A high-pressure screw connection according to claim 10, **characterized in that** a screw, especially a screw nut (6), encompasses the housing at least partly in the axial direction.

12. A high-pressure screw connection according to one of the claims 1 to 11, **characterized in that** a housing (2) is arranged in a straight manner, in an angular manner, as a T-element or as a crosspiece.

13. A high-pressure screw connection according to one of the claims 8 to 12, **characterized in that** the sealing ring (5) with conical external shape consists of a pressure-proof plastic material, especially PEEK.

14. A high-pressure screw connection according to one of the claims 1 to 13, **characterized in that** the sealing sleeve (4) is slid with tight fit onto the tube (9), especially with a diameter tolerance of less than 1 mm, preferably < 0.1 mm.

## Revendications

1. Raccord fileté pour hautes pressions (1) pour l'acheminement de substances gazeuses, liquides et/ou solides, en particulier pour le remplissage du réservoir de carburant de véhicules, comprenant
- un corps creux tubulaire (9), qui est au moins partiellement entouré par un manchon d'étanchéité (4),
le raccord fileté pour hautes pressions (1) comprenant un logement (2) avec un passage de fluide (3) et un cône d'étanchéité (2a),
**caractérisé en ce que** le manchon d'étanchéité (4) est relié par solidarité de matière au corps tubulaire (9) de manière à créer une liaison sans fuites pour des pressions de plus de 700 bars, en particulier de plus de 1000 bars, de préférence de plus de 4000 bars et le corps tubulaire (9) est déchargé par la liaison par solidarité de matière, de sorte qu'il ne se crée pas de contraintes axiales,
et le manchon d'étanchéité (4) est entouré par une chambre annulaire (8) qui débouche dans un alésage de dégazage (8a).

2. Raccord fileté pour hautes pressions selon la revendication 1, **caractérisé en ce que** l'assemblage par solidarité de matière est l'un des assemblages suivants :
- un assemblage brasé
- un assemblage soudé
- un assemblage collé
- un assemblage vulcanisé.

3. Raccord fileté pour hautes pressions selon l'une des revendications 1 à 2, **caractérisé en ce que** l'assemblage par solidarité de matière comprend une soudure (4b, 104b).

4. Raccord fileté pour hautes pressions selon l'une des revendications 1 à 3, **caractérisé en ce que** le manchon d'étanchéité (4) présente des nervures sur son côté orienté à l'opposé du corps tubulaire (9).

5. Raccord fileté pour hautes pressions selon l'une des revendications 1 à 4, **caractérisé en ce que** le corps tubulaire (9) présente un contour d'adaptation (120) sur son côté opposé au manchon d'étanchéité (4).

6. Raccord fileté pour hautes pressions selon l'une des revendications 1 à 5, **caractérisé en ce que** le manchon d'étanchéité (4) est complètement enfilé sur le corps tubulaire, en particulier le tube (9).

7. Raccord fileté pour hautes pressions selon l'une des revendications 1 à 6, **caractérisé en ce que** le corps tubulaire (9) est inséré dans le logement (2) avec le manchon d'étanchéité (4).

8. Raccord fileté pour hautes pressions selon l'une des revendications 1 à 7, **caractérisé en ce que** le manchon d'étanchéité (4) présente un épaulement annulaire (4a) dans lequel est inséré un joint d'étanchéité (5) correspondant au cône d'étanchéité (2a) d'un logement (2).

9. Raccord fileté pour hautes pressions selon l'une des revendications 1 à 8, **caractérisé en ce qu'**il est prévu entre le manchon d'étanchéité (4) et une vis, en particulier un écrou fileté, (6) un frein de vis (7) qui se compose en particulier de deux rondelles.

10. Raccord fileté pour hautes pressions selon l'une des revendications 1 à 9, **caractérisé en ce qu'**une extrémité côté logement d'une vis, en particulier d'un écrou fileté (6), entoure le manchon d'étanchéité (4) et/ou le frein de vis (7) dans le sens axial.

11. Raccord fileté pour hautes pressions selon la revendication 10, **caractérisé en ce qu'**une vis, en particulier un écrou fileté (6), entoure au moins partiellement le logement dans le sens axial.

12. Raccord fileté pour hautes pressions selon l'une des revendications 1 à 11, **caractérisé en ce qu'**un logement (2) est réalisé de forme rectiligne, coudée, en T ou en croix.

13. Raccord fileté pour hautes pressions selon l'une des revendications 8 à 12, **caractérisé en ce que** le joint d'étanchéité (5) de forme extérieure conique se compose d'une matière plastique résistante à la pression, en particulier de PEEK.

14. Raccord fileté pour hautes pressions selon l'une des revendications 1 à 13, **caractérisé en ce que** le manchon d'étanchéité (4) est enfilé sur le tube (9) avec un ajustement étroit, en particulier avec une tolérance de diamètre de moins de 1 mm, de préférence de moins de 0,1 mm.
